# EUROPEAN PATENT APPLICATION

(11) **EP 2 744 093 A1**
(43) Date of publication of application: **18.06.2014**
(21) Application number: 13194029.8
(22) Date of filing: 22.11.2013
(51) Int. Cl.: H02M 3/28, H01F 27/28, H02M 7/00

(54) **Power supply device**

(30) Priority: 13.12.2012 JP 2012272753
(71) Applicant: FUJITSU LIMITED, Kawasaki-shi, Kanagawa 211-8588 (JP)
(72) Inventor: Eguchi, Susumu, Kawasaki-shi, Kanagawa 211-8588 (JP)
(74) Representative: Fenlon, Christine Lesley

(57) **Abstract**

A power supply device includes a primary circuit that includes two primary windings, a secondary circuit that includes two secondary windings and a switching element for synchronous rectification, a first transformer configured to couple one of the two primary windings with one of the two secondary windings, a second transformer configured to couple the other one of the two primary windings with the other one of the two secondary windings, and a first substrate on which both output ends of one of the two secondary windings and both output ends of the other one of the two secondary windings are disposed to face each other, wherein the switching element for synchronous rectification is disposed in a region between the first transformer and the second transformer on the first substrate.

## Description

### FIELD

The present disclosure relates to a power supply device.

### BACKGROUND

A power supply module has been known in the related art in a form in which a primary winding is coupled with a secondary winding by each of two transformers. The power supply module of the related art includes a component-mounting layer on which the primary winding, the transformer, a primary circuit, and a secondary circuit are mounted; a first inner layer on which a pattern of a first secondary winding is drawn out in one direction is formed; and a second inner layer on which a pattern of a second secondary winding is drawn out in the other direction is formed. See, for example, Japanese Laid-Open Patent Publication No. 2004-304906.

Incidentally, power supply device, in which the primary winding and the secondary winding are coupled with each of two transformers as in the configuration described in Japanese Laid-Open Patent Publication No. 2004-304906, may enable high capacity (for example, high current). However, when a device is changed to cope with a high current, the power supply device becomes large in size because elements such as a transformer, a switching element and a choke coil are disposed on a main substrate side by side. Further, since the path through which current flows increases, loss caused by, for example, pattern resistance or parasitic inductance generated in the power supply device is increased. Further, the power supply device gains a tendency that whenparasitic inductance increases, power noise (V = Ldi/dt) due to pulse current tends to be increased.

The present disclosure has been made in an effort to provide a power supply device that enables high current while aiming for reduced size, high efficiency, and the reduction of power noise.

### SUMMARY

According to an embodiment of an aspect of the present disclosure, there is provided a power supply device including a primary circuit that includes two primary windings, a secondary circuit that includes two secondary windings and a switching element for synchronous rectification, a first transformer configured to couple one of the two primary windings with one of the two secondary windings, a second transformer configured to couple the other one of the two primary windings with the other one of the two secondary windings, and a first substrate on which both output ends of one of the two secondary windings and both output ends of the other one of the two secondary windings are disposed to face each other, wherein the switching element for synchronous rectification is disposed in a region between the first transformer and the second transformer on the first substrate.

Advantages of the invention may be realized and attained by means of the elements and combinations particularly pointed out in the claims. It is to be understood that both the foregoing general description and the following detailed description are exemplary and explanatory and are not restrictive of the invention, as claimed.

### BRIEF DESCRIPTION OF DRAWINGS

FIG. 1 is a top plan view schematically illustrating an entire power supply device 1 according to an embodiment.
FIG. 2 is a diagram illustrating an example of a secondary circuit 20 together with an example of part of a primary circuit 10.
FIG. 3 is a diagram illustrating an operation (current loop) when a double forward circuit illustrated in FIG. 2 has been turned on.
FIG. 4 is a diagram illustrating an operation (current loop) when the double forward circuit illustrated in FIG. 2 has been turned off.
FIG. 5 is a perspective view illustrating a component arrangement and a wiring pattern of the secondary circuit 20 according to the embodiment.
FIG. 6 is a top plan view illustrating the component arrangement and the wiring pattern of the secondary circuit 20 illustrated in FIG. 5.
FIG. 7 is a side view illustrating the component arrangement and the wiring pattern of the secondary circuit 20 illustrated in FIG. 5.
FIG. 8 is a top plan view illustrating an example of a transformer winding substrate 6.
FIG. 9 is a perspective view illustrating a component arrangement and a wiring pattern of a secondary circuit according to a comparative example.
FIG. 10 is a diagram illustrating another example of a secondary circuit 20B together with an example of a part of the primary circuit 10.
FIG. 11 is a side view schematically illustrating a component arrangement and a wiring pattern of the secondary circuit 20B illustrated in FIG. 10.
FIG. 12A is a top plan view illustrating a front surface side of an example of a transformer winding substrate 6B in the secondary circuit 20B.
FIG. 12B is a top plan view illustrating a rear surface side of the example of a transformer winding substrate 6B in the secondary circuit 20B.
FIG. 13A is a top plan view schematically illustrating a component arrangement and a wiring pattern of a secondary circuit 20C according to another example.
FIG. 13B is a side view of the secondary circuit 20C illustrated in FIG. 13A.
FIG. 14A is a top plan view schematically illustrating a component arrangement and a wiring pattern of a secondary circuit 20D according to another example.
FIG. 14B is a side view of the secondary circuit 20D illustrated in FIG. 14A.
FIG. 15A is a top plan view schematically illustrating a component arrangement and a wiring pattern of a secondary circuit 20E according to another example.
FIG. 15B is a side view of the secondary circuit 20E illustrated in FIG. 15A.
FIG. 16 is a perspective view schematically illustrating a component arrangement and a wiring pattern of a secondary circuit 20F according to another example.

### DESCRIPTION OF EMBODIMENTS

Hereinafter, each embodiment will be described in detail with reference to the accompanying drawings.

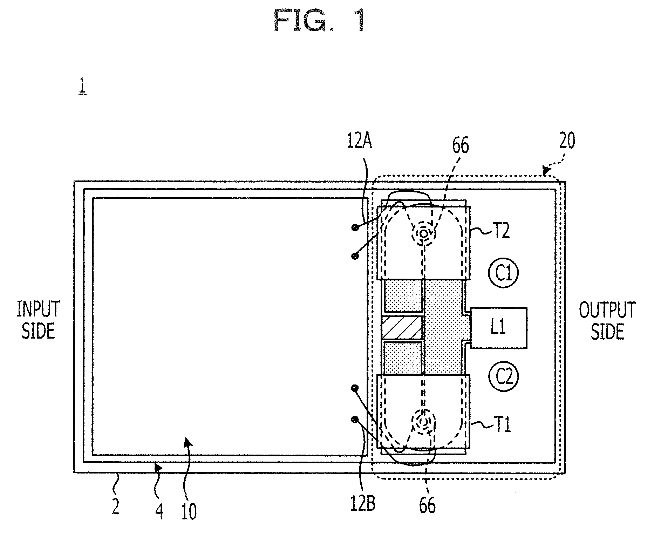

FIG. 1 is a top plan view schematically illustrating an entire power supply device 1 according to an embodiment.

The power supply device 1 may be used for arbitrary usage, but may be used as, for example, a power supply device for a large computer (for example, a server). The power device 1 includes a primary circuit 10, a secondary circuit 20, and first and second transformers T1 and T2.

The primary circuit 10 and the secondary circuit 20 are electronically coupled to each other through the first and second transformers T1 and T2. That is, primary windings 12A and 12B of the primary circuit 10 are wound around an iron core 66 of each of the first and second transformers T1 and T2. The primary circuit 10 and the secondary circuit 20 may be formed on the same main substrate 4. However, the primary circuit 10 and the secondary circuit 20 may be formed on separate substrates, respectively. The primary circuit 10 and the secondary circuit 20 may be accommodated in, for example, a case 2.

In FIG. 1, the primary circuit 10 is displayed as a black box, except for the primary windings 12A and 12B, and the secondary circuit 20 is substantially illustrated as an outline. The secondary circuit 20 will be described in detail below. Details of primary circuit 10 may be arbitrarily determined. For example, the primary circuit 10 may include a power factor correction circuit, a noise filter, and an AC terminal.

In the example illustrated in FIG. 1, in the primary circuit 10 and the secondary circuit 20, the input side (for example, the side connected to a power supply) of the primary circuit 10 is disposed on one side (for example, a left side) of the case 2, and the output side of the secondary circuit 20 is disposed on the other side (for example, right side) of the case 2. In the example illustrated in FIG. 1, the direction of cooling air for cooling the power supply device 1 may be from the output side to the input side, or the reverse direction from the input side to the output side. In either case, cooling air may be supplied to respective heat-generating components by appropriately disposing each heat-generating component (for example, the first and second transformers T1 and T2, synchronous rectifying transistors Q3, Q4, and Q5), a choke coil L1, and capacitors C1 and C2 of the primary circuit 20 to be described below.

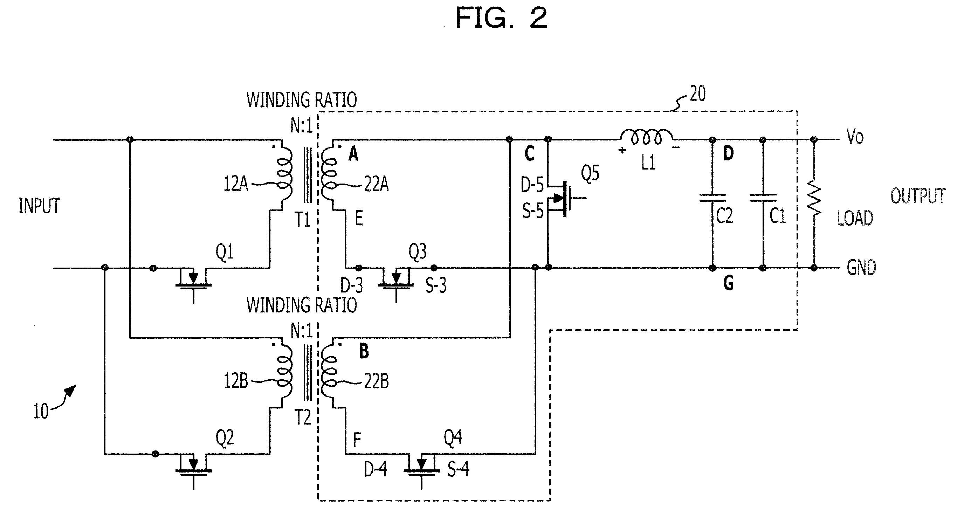

FIG. 2 is a diagram illustrating an example of the secondary circuit 20 together with an example of part of the primary circuit 10. The circuit illustrated in FIG. 2 corresponds to an example of a double forward circuit. The double forward circuit has a circuit configuration aiming for large capacity by connecting forward circuits in parallel while aiming to share constituent elements (for example, the synchronous rectifying transistor Q5, and the choke coil L1). The forward circuit is an isolated switching converter, and converts (steps down) a voltage from the input side and outputs the converted voltage to the output side. There is no substantial energy change for before and after the voltage conversion (i.e., the primary circuit 10 and the secondary circuit 20 have substantially the same energy), so that the secondary circuit 20 may obtain a high current with a low voltage.

In the example illustrated in FIG. 2, the primary circuit 10 includes the two primary windings 12A and 12B, and the transistors Q1 and Q2. The secondary circuit 20 includes a secondary winding 22A on the first transformer T1 side, a second winding 22B on the second transformer T2 side, the synchronous rectifying transistors Q3, Q4, and Q5, the choke coil L1, and the capacitors C1 and C2. Further, the primary winding 12A and the secondary winding 22A are constituent elements of the first transformer T1, and the primary winding 12B and the secondary winding 22B are also constituent elements of the second transformer T2. The primary windings 12A and 12B of the primary circuit 10 and the secondary windings 22A and 22B of the secondary circuit 22 make two pairs, and are coupled to each other through the first and second transformers T1 and T2, respectively. The synchronous rectifying transistors Q3, Q4, and Q5 may be, for example, metal oxide semiconductor field-effect transistors (MOSFETs) or insulated gate bipolar transistors (IGBTs). The transistors Q1 and Q2 or the synchronous rectifying transistors Q3, Q4, and Q5 may be switching-controlled (for example, PWM controlled) by a controller (not illustrated).

In the example illustrated in FIG. 2, the secondary winding 22A is connected in series to the synchronous rectifying transistor Q3, and the secondary winding 22B is connected in series to the synchronous rectifying transistor Q4, and the secondary windings 22A and 22B are connected to the synchronous rectifying transistor Q5 in parallel at the front end (for example, a side close to the input side) of the synchronous rectifying transistor Q5. A high electric potential side (for example, the Vo side) of the synchronous rectifying transistor Q5 and a high electric potential side of the secondary winding 22A are connected to one end of the choke coil L1, and high electric potential sides of the capacitors C1 and C2 as well as a load are connected to the other end of the choke coil L1. Similar to the synchronous rectifying transistor Q5, the capacitors C1 and C2 and the load are connected to the choke coil L1 in parallel between the high electric potential side Vo and a ground side GND.

Further, the example illustrated in FIG. 2 is a double forward circuit, and the circuit on the secondary winding 22B side (for example, the secondary winding 22B and the synchronous rectifying transistor Q4 on the second transformer T2 side) is connected in parallel to the synchronous rectifying transistor Q5 at the front end of the synchronous rectifying transistor Q5 in terms of a relationship with the circuit on the secondary winding 22A side (for example, the secondary winding 22A and the synchronous rectifying transistor Q3 at the first transformer T1 side). However, if the circuit on the secondary winding 22B side is connected to the load in parallel in terms of a relationship with the circuit on the secondary winding 22A side, other arrangements may be adopted. For example, the circuit at the secondary winding 22B may similarly include a new synchronous rectifying transistor separate from the synchronous rectifying transistor Q5, and then may be connected to the load in parallel at the front end of the choke coil L1 in terms of a relationship with the circuit on the secondary winding 22A side. Alternatively, the circuit on the secondary winding 22B side may similarly include a new synchronous rectifying transistor separate from the synchronous rectifying transistor Q5 and a new choke coil separate from the choke coil L1. The circuit on the secondary winding 22B then may be connected to the load in parallel at the front end of the capacitor C2 in terms of a relationship with the circuit on the secondary winding 22A side. Otherwise, the circuit on the secondary winding 22B side may similarly include a new synchronous rectifying transistor separate from the synchronous rectifying transistor Q5, a new choke coil separate from the choke coil L1, and a new capacitor separately from the capacitors C2 and C1. The circuit on the secondary winding 22B side may then be connected to the load in parallel at the front end of the load in terms of a relationship with the circuit on the secondary winding 22A side.

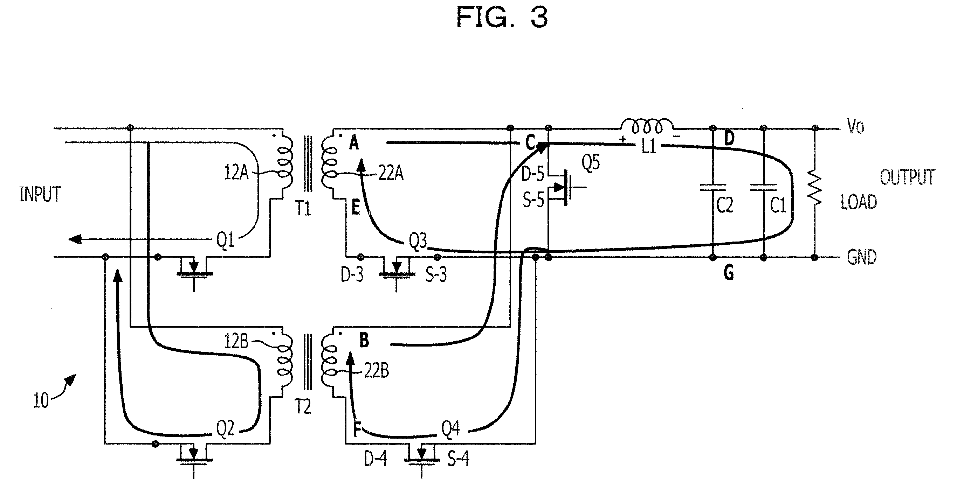

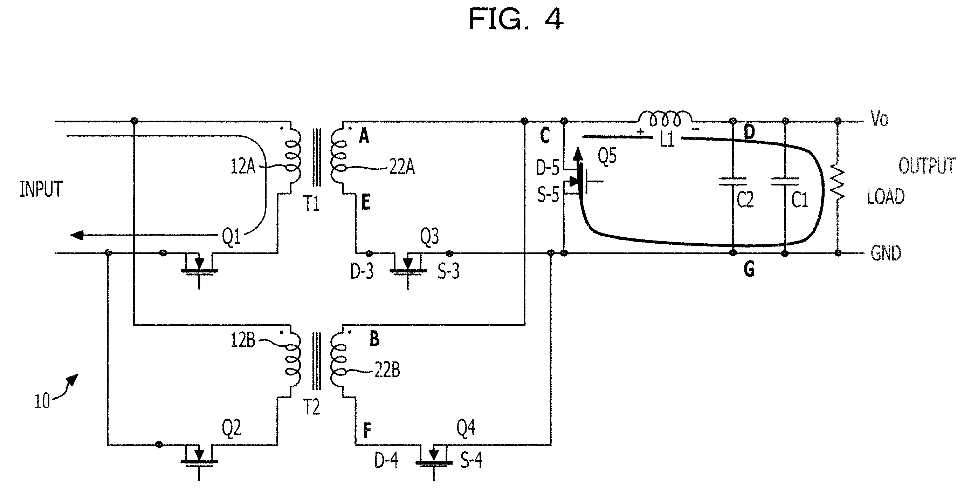

FIG. 3 is a diagram illustrating behaviour when the double forward circuit illustrated in FIG. 2 has been turned on (for example, a current loop), and FIG. 4 is a diagram illustrating behaviour when the double forward circuit illustrated in FIG. 2 has been turned off (for example, a current loop).

When the double forward circuit is turned on, the transistors Q1 and Q2 turn on, the synchronous rectifying transistors Q3 and Q4 turn on, and the synchronous rectifying transistor Q5 turns off. In this case, as illustrated in FIG. 3, in the secondary circuit 20, a current loop is formed with the flow being from the first and second transformers T1 and T2 (the high electric potential sides of the secondary windings 22A and 22B) to the choke coil L1 to the load to the synchronous rectifying transistors Q3 and Q4 and back to the first and second transformers T1 and T2 (the low electric potential sides of the secondary windings 22A and 22B).

When the double forward circuit is turned off, the transistors Q1 and Q2 turn off, the synchronous rectifying transistors Q3 and Q4 turn off, and the synchronous rectifying transistor Q5 turns off. In this case, the choke coil L1 tends to continuously produce the same current, so that, as illustrated in FIG. 4, in the secondary circuit 20, a current loop is formed with a flow from the choke coil L1 to the load to the synchronous rectifying transistor Q5 and back to the choke coil L1.

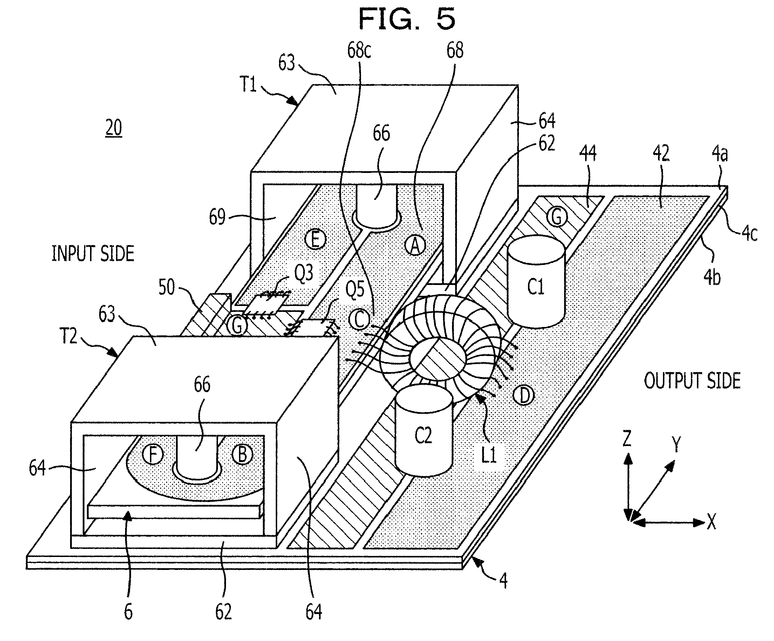

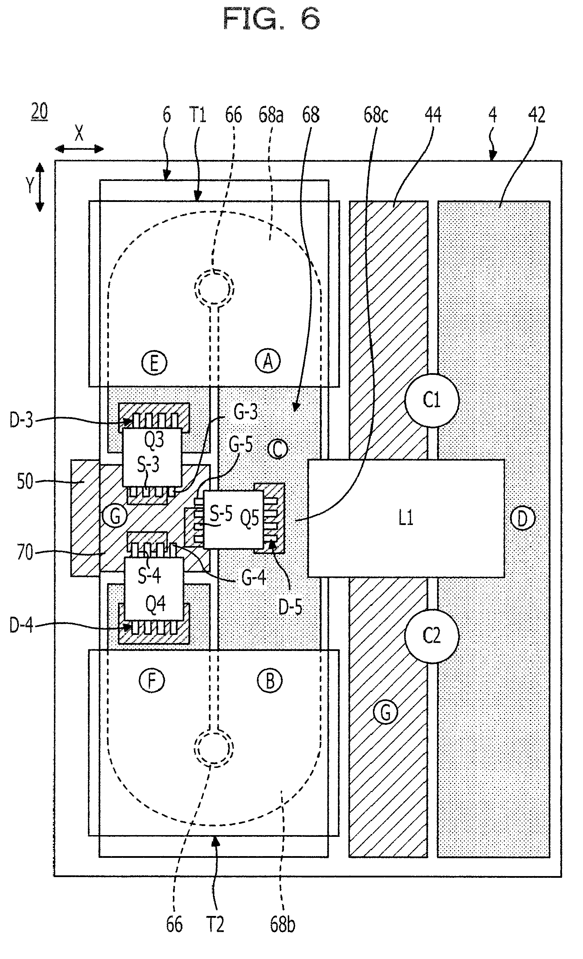

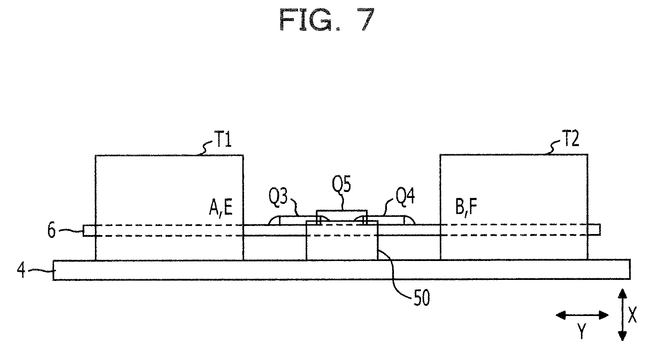

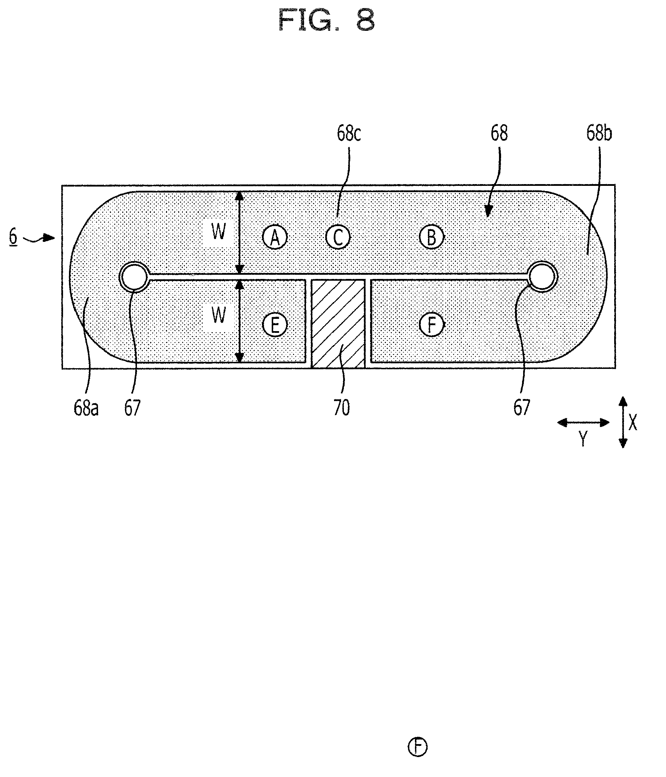

FIG. 5 is a perspective view illustrating a component arrangement and a wiring pattern of the secondary circuit 20 according to the embodiment. FIG. 6 is a top plan view illustrating the component arrangement and the wiring pattern of the secondary circuit 20 illustrated in FIG. 5. FIG. 7 is a side view illustrating the component arrangement and the wiring pattern of the secondary circuit 20 illustrated in FIG. 5 when viewed from the input side. FIG. 8 is a top plan view illustrating an example of a transformer winding substrate 6. In FIGs. 5 to 8, hatched portions with diagonal lines and satin portions both designate conductor patterns formed on the substrates (for example, the main substrate 4 and the transformer winding substrate 6), and in addition hatched portions with diagonal lines also indicate ground potential areas. Further, in FIGs. 5 to 7, alphabet letters A to G surrounded by circles are points in the wiring pattern of the secondary circuit 20, respectively, and correspond to points indicated by alphabet letters A to G in the circuit illustrated in FIG. 2, respectively. Hereinafter, alphabet letters A to G surrounded by the circles will be called, for example, circle A.

As illustrated in FIGs. 5 to 7, the secondary circuit 20 is made up of two substrates: the main substrate 4 and the transformer winding substrate 6.

As illustrated in FIG. 5, a positive electrode-side output unit 42 and a ground output unit 44 are formed on a front surface 4a of the main substrate 4. The positive electrode-side output unit 42 and the ground output unit 44 are formed in a region near an output side (for example, a right region of FIG. 5) of the main substrate 4. The positive electrode-side output unit 42 and the ground output unit 44 are formed in mode in which the ground output unit 44 is positioned to be closer to the input side than the positive electrode-side output unit 42. Further, the positive electrode-side output unit 42 and the ground output unit 44 may be connected to a terminal (not illustrated) that is to be connected to the load.

In the main substrate 4, a solid pattern connected to the ground output unit 44 may be provided on a rear surface 4b. Alternatively, the main substrate 4 may be a multilayer substrate, and the solid pattern connected to the ground output unit 44 may be provided in an intermediate layer 4c.

The first and second transformers T1 and T2 are installed on the main substrate 4. The first and second transformers T1 and T2 each include a transformer core. Each transformer core has, for example, the shape of the letter E by means of an upper member 63, an iron core 66, and side members 64 at both sides of the iron core 66, and a lower member 62 that is attached in a such a way that the openings of the letter E are closed. The transformer core may have an arbitrary shape. Further, in the example illustrated in FIG. 5, the upper member 63 and the side members 64 may be integrally formed.

As illustrated in FIGs. 5 and 6, the first and second transformers T1 and T2 are disposed in the region near the input side in the main substrate 4 (for example, a left region in FIGs. 5 and 6). As illustrated in FIG. 5, the first and second transformers T1 and T2 are preferably disposed in a direction in which the longitudinal axis of the iron core 66 corresponds to a vertical direction (for example, the Z axis) of the main substrate 4. Further, as illustrated in FIG. 5, the first and second transformers T1 and T2 may be disposed to be separated from each other along the Y axis.

The capacitors C1 and C2 are installed on the main substrate 4. One end of each of the capacitors C1 and C2 is connected to the positive electrode-side output unit 42, and the other end of each of the capacitors C1 and C2 is connected to the ground output unit 44.

The choke coil L1 is installed between the main substrate 4 and the transformer winding substrate 6. One end of the choke coil L1 is connected to an output end (for example circle A and circle B) at the high electric potential side of a winding pattern 68 of the transformer winding substrate 6, and the other end of the choke coil L1 is connected to the positive electrode-side output unit 42 of the main substrate 4.

As illustrated in FIGs. 5 and 6, the transformer winding substrate 6 is disposed at the input side of the main substrate 4, and corresponds to the positions of the first and second transformers T1 and T2. Further, the transformer winding substrate 6 is disposed to be in parallel to the main substrate 4. In this case, as illustrated in FIGs. 5 and 7, from a viewpoint of improving the heat dissipating properties of the heat-generating components (for example the synchronous rectifying transistors Q3, Q4, and Q5) on the transformer winding substrate 6, the transformer winding substrate 6 may be disposed to be separated from the main substrate 4 in the vertical direction (for example, the Z direction) of the main substrate 4. That is, the transformer winding substrate 6 may be disposed so that there is a space on an upper side of the main substrate 4. However, the transformer winding substrate 6 may be disposed on the main substrate 4 while being in contact with the front surface of the main substrate 4. In this case, the lower members 62 of the first and second transformers T1 and T2 may be attached at the rear surface of the main substrate 4 by forming holes, which pass through lower ends of the side members 64 and the iron cores 66 of the first and second transformers T1 and T2, in the main substrate 4. Further, in the example illustrated in FIG. 5, the lower members 62 of the first and second transformers T1 and T2 are disposed by using a space between the main substrate 4 and the transformer winding substrate 6. Further, the transformer winding substrate 6 is in contact with the front surfaces of the lower members 62 of the first and second transformers T1 and T2, so that the transformer winding substrate 6 may be surface-supported by the lower members 62, or may be separated from the front surfaces of the lower members 62 of the first and second transformers T1 and T2 in an upper direction.

The winding pattern 68 is formed on the transformer winding substrate 6 as illustrated in FIG. 8. Since the transformer winding substrate 6 is in parallel to the main substrate 4 as mentioned above, the winding pattern 68 on the transformer winding substrate 6 extends within a surface parallel to the main substrate 4. As illustrated in FIG. 8, the winding pattern 68 may be formed to be thick and short as much as possible from a viewpoint of decreasing both pattern resistance and parasitic inductance. For example, the winding pattern 68 may be formed with a thickness that uses the width of the transformer winding substrate 6 in an X direction as much as possible. In this case, the thickness W of the winding pattern 68 is approximately 1/2 of the width of the transformer winding substrate 6 along the X axis. Further, the transformer winding substrate 6 has holes 67 (for example, see FIG. 8) through which the iron cores 66 of the first and second transformers T1 and T2 pass, respectively.

As illustrated in FIG. 8, the winding pattern 68 has a U-shaped portion 68a, a U-shaped portion 68b, and a connecting portion 68c. As illustrated in FIG. 8, when viewed from the top, the U-shaped portion 68a is formed in a U-shape so as to surround the hole 67 through which the iron core 66 of the transformer T1 passes. The shape of the circumference of the U-shaped portion 68a that goes around the iron core 66 may be a circle so as to comply with the outer circumference of the iron core 66 of the first transformer T1 as illustrated in FIG. 8. As illustrated in FIG. 8, when viewed from the top, the U-shaped portion 68b is formed in a U-shape so as to surround the hole 67 through which the iron core 66 of the transformer T2 passes. The shape of the circumference of the U-shaped portion 68b that surrounds the iron core 66 may be a circle so as to comply with the outer circumference of the iron core 66 of the first transformer T2 as illustrated in FIG. 8.

As illustrated in FIG. 8, the connecting portion 68c of the winding pattern 68 is formed to extend between one end of each of the U-shaped portion 68a and the U-shaped portion 68b (the upper side ends in FIG. 8). The connecting portion 68c may be integrally formed with the ends of the U-shaped portion 68a and the U-shaped portion 68b with the same thickness as that of the ends of the U-shaped portion 68a and the U-shaped portion 68b.

The U-shaped portion 68a and the U-shaped portion 68b of the winding pattern 68 form the secondary winding 22A and the secondary winding 22B, respectively (for example, see FIG. 2). The U-shaped portion 68a corresponding to the secondary winding 22A and the U-shaped portion 68b corresponding to the secondary winding 22B are formed so that the openings of the U-shape face each other along the Y axis. Accordingly, both output ends of the secondary winding 22A (for example, circle A and circle E) and both output ends of the secondary winding 22B (for example, circle B and circle F) face each other along the Y axis. In this case, the output end (for example, circle A) at the high electric potential side of the secondary winding 22A and the output end (for example, circle B) at the high electric potential side of the secondary winding 22B face each other along the Y axis, and the output end (for example, circle E) at the low electric potential side of the secondary winding 22A and the output end (for example, circle F) at the low electric potential side of the secondary winding 22B face each other along the Y axis.

Both the output ends of the secondary winding 22A (for example, circle A and circle E) and both the output ends of the secondary winding 22B (for example circle B and circle F) may face each other along the Y axis while slightly deviate along the X axis. That is, in the example illustrated in FIG. 8, the output end (for example, circle A) at the high electric potential side of the secondary winding 22A and the output end (for example, circle B) at the high electric potential side of the secondary winding 22B are positioned at the same distance along the X axis from the end of the transformer winding substrate 6 along the X axis. Further, the output end (for example, circle E) at the low electric potential side of the secondary winding 22A and the output end (for example, circle F) at the low electric potential side of the secondary winding 22B are positioned at the same distance along the X axis from the end of the transformer winding substrate 6 along the X axis. However, the output end (for example, circle A) at the high electric potential side of the secondary winding 22A and the output end (for example, circle B) at the high electric potential side of the secondary winding 22B may be positioned to have a difference by a distance ΔX1 along the X axis from the end of the transformer winding substrate 6 along the X axis. Also, the output end (for example, circle E) at the low electric potential side of the secondary winding 22A and the output end (for example, circle F) at the low electric potential side of the secondary winding 22B may be positioned to have a difference by a distance ΔX2 along the X axis from the end of the transformer winding substrate 6 along the X axis. In this case, the distance ΔX1 may be the same as or different to the distance ΔX2. However, the distance ΔX1 and the distance ΔX2 may be set to a value smaller than the value of the thickness W of the winding pattern 68 at each output end.

The U-shaped portion 68a and the U-shaped portion 68b of the winding pattern 68 on the transformer winding substrate 6 are connected with each other between the output end (for example, circle A) for the high electric potential side of the secondary winding 22A and the output end (for example, circle B) for the high electric potential side of the secondary winding 22B. That is, between the output end (for example, circle A) near the high electric potential side of the secondary winding 22A and the output end (for example, circle B) near the high electric potential side of the secondary winding 22B, the U-shaped portion 68a and the U-shaped portion 68b of the winding pattern 68 face each other with the connecting portion 68c interposed therebetween along the Y axis. In addition, the U-shaped portion 68a and the U-shaped portion 68b of the winding pattern 68 are connected with each other through the connecting portion 68c. In the example illustrated in FIG. 5, the one end (for example, circle C) of the choke coil L1 is connected to the connecting portion 68c. The U-shaped portion 68a and the U-shaped portion 68b of the winding pattern 68 on the transformer winding substrate 6 are separated from each other along the Y axis between the output end (for example, circle E) for the low electric potential side of the secondary winding 22A and the output end (for example, circle F) for the low electric potential side of the secondary winding 22B. A ground output unit 70 is formed in the spaced region. That is, between the output end (for example, circle E) at the low electric potential side of the secondary winding 22A and the output end (for example, circle F) at the low electric potential side of the secondary winding 22B, the U-shaped portion 68a and the U-shaped portion 68b of the winding pattern 68 face each other with the ground output unit 70 interposed therebetween along the Y axis. The ground output unit 70 is formed to be separated from the U-shaped portion 68a and the U-shaped portion 68b.

The ground output unit 70 on the transformer winding substrate 6 is connected to the ground output unit 44 on the main substrate 4. In this case, the ground output unit 70 and the ground output unit 44 may be connected through the solid pattern formed on the rear surface 4b or the intermediate layer 4 of the main substrate 4. Further, in the example illustrated in FIG. 5, the ground output unit 70 on the transformer winding substrate 6 is connected to the solid pattern formed on the rear surface 4b or the intermediate layer 4 of the main substrate 4 through a copper plate 50. Accordingly, the ground output unit 70 on the transformer winding substrate 6 is connected to the ground output unit 44 on the main substrate 4 through the cooper plate 50 and the solid pattern.

The synchronous rectifying transistors Q3, Q4, and Q5 are installed on the transformer winding substrate 6. As illustrated in FIGs. 5 and 6, the synchronous rectifying transistors Q3, Q4, and Q5 are disposed between the first and second transformers T1 and T2 along the Y axis. In the example illustrated in FIGs. 5 and 6, the synchronous rectifying transistors Q3, Q4, and Q5 are disposed within a formation range of the winding pattern 68 on the transformer winding substrate 6 along the X axis. That is, of the area in which the synchronous rectifying transistors Q3, Q4, and Q5 are installed along the X axis is within the formation range of the winding pattern 68 on the transformer winding substrate 6 along the X axis.

In the example illustrated in FIG. 6, the synchronous rectifying transistors Q3 and Q4 are disposed to face each other along the Y axis between the output end (for example, circle E) for the low electric potential side of the secondary winding 22A and the output end (for example, circle F) for the low electric potential side of the secondary winding 22B. Further, the synchronous rectifying transistor Q5 is disposed between the output end (for example, circle A) for the high electric potential side of the secondary winding 22A and the output end (for example, circle B) for the high electric potential side of the secondary winding 22B. In this case, a drain terminal D-3 of the synchronous rectifying transistor Q3 is bonded to the end of the U-shaped portion 68a of the winding pattern 68 by, for example, soldering so as to be connected to the output end (for example, circle E) of the lower potential side of the secondary winding 22A. A drain terminal D-4 of the synchronous rectifying transistor Q4 is bonded to the end of the U-shaped portion 68b of the winding pattern 68 by, for example, soldering so as to be connected to the output end (for example, circle F) of the lower potential side of the secondary winding 22B. Further, a drain terminal D-5 of the synchronous rectifying transistor Q5 is bonded to the connecting portion 68c of the winding pattern 68 by, for example, soldering so as to be connected to the end (for example, circle C) of the choke coil L1. Further, the drain terminal D-5 of the synchronous rectifying transistor Q5 may be bonded to the end of the U-shaped portion 68a or the U-shaped portion 68b of the winding pattern 68 by, for example, soldering so as to be connected to the output end (for example, circle A) for the high electric potential side of the secondary winding 22A or the output end (circle B) for the high electric potential side of the secondary winding 22B. Even in this case, the drain terminal D-5 of the synchronous rectifying transistor Q5 is connected to the end (for example, circle C) of the choke coil L1 as a result.

Further, in the example illustrated in FIG. 6, a source terminal S-3 of the synchronous rectifying transistor Q3 may be bonded to the ground output unit 70 on the transformer winding substrate 6 by, for example, soldering. A source terminal S-4 of the synchronous rectifying transistor Q4 may be bonded to the ground output unit 70 on the transformer winding substrate 6 by, for example, soldering. Further, a source terminal S-5 of the synchronous rectifying transistor Q5 may be bonded to the ground output unit 70 on the transformer winding substrate 6 by, for example, soldering. Gates G3-3, G4-4, and G5-5 of the synchronous rectifying transistors Q3, Q4, and Q5 are connected to the controller (not illustrated).

According to the example illustrated in FIGs. 5 to 8, as the current loop (that is,the loop distance) within the secondary circuit 20 decreases, both pattern resistance and parasitic inductance decrease. Accordingly, while aiming for the use of high current by the double forward circuit, small size, decreased conductor loss (that is, increased efficiency), and decreased power noise (V = Ldi/dt) may be achieved. Further, since the power noise (V = Ldi/dt) increases as the current becomes high, a decrease in power noise makes it possible to easily achieve the use of high current.

Specifically, according to the example illustrated in FIGs. 5 to 8, by disposing the synchronous rectifying transistors Q3, Q4, and Q5 between the first and second transformers T1 and T2 on the transformer winding substrate 6, the small size, and decrease in conductor loss and noise may be achieved. For example, the drain terminal D-5 of the synchronous rectifying transistor Q5 may be substantially connected with the end (for example, circle C) of the choke coil L1 with a minimum distance, so that it is possible to achieve small size, decrease conductor loss, and decrease noise. Further, the synchronous rectifying transistors Q3 and Q4 may be substantially connected to the output end (for example, circle E) for the low electric potential side of the secondary winding 22A and the output end (for example, circle F) for the low electric potential side of the secondary winding 22B with a minimum distance, respectively, so that small size, and the decrease in conductor loss and noise may be achieved.

Further, according to the example illustrated in FIGs. 5 to 8, the source terminals S-3, S-4, and S-5 of the synchronous rectifying transistors Q3, Q4, and Q5 are connected to the ground output unit 44 on the main substrate 4 through the solid pattern of the main substrate 4 from the common ground output unit 70 on the transformer winding substrate 6. By using the solid pattern, the resistance component and the parasitic inductance component may be decreased, thereby achieving a decrease in conductor loss and noise.

Further, according to the example illustrated in FIGs. 5 to 8, the output end (for example circle A) for the high electric potential side of the secondary winding 22A of the first transformer T1 side and the output end (for example, circle B) for the high electric potential side of the secondary winding 22B of the second transformer T2 side are directly connected with each other through the winding pattern 68 (for example, a connecting portion 68c) on the transformer winding substrate 6. Accordingly, the resistance component and the parasitic inductance component are less than a situation in which the transformer is configured by winding a conductive wire around an iron core, thereby enabling a decrease in conductor loss and noise. Further, since the secondary winding 22A and the secondary winding 22B are formed by the winding pattern 68, the resistance component and the parasitic inductance component are less than a situation in which the transformer is configured by winding a conductive wire around the iron core, thereby enabling a decrease in conductor loss and noise.

Further, according to the example illustrated in FIGs. 5 to 8, the heat-generating components (for example, synchronous rectifying transistors Q3, Q4, and Q5) may be cooled by means of the transformer winding substrate 6 (for example, heat may be transferred to the transformer winding substrate 6). Accordingly, a heat sink, which may be separately installed in the synchronous rectifying transistors Q3, Q4, and Q5, may not be necessary. However, a heat sink may be separately installed as necessary. Further, when the transformer winding substrate 6 is disposed to be separated from the main substrate 4, cooling air may flow to both the front and rear surface sides of the transformer winding substrate 6, thereby improving cooling efficiency.

In the example illustrated in FIGs. 5 to 8, as illustrated in FIG. 6, installation regions of the synchronous rectifying transistors Q3, Q4, and Q5 are set between the first and second transformers T1 and T2 along the Y axis without overlapping the first and second transformers T1 and T2 along the Y axis. However, the installation regions of the synchronous rectifying transistors Q3, Q4, and Q5 may overlap the first and second transformers T1 and T2 along the Y axis. For example, the synchronous rectifying transistors Q3 and Q4 may be disposed, for example, so that parts of the synchronous rectifying transistors Q3 and Q4 are hidden by the upper members 63 of the first and second transformers T1 and T2 when viewed from the top by further decreasing the distance between the first and second transformers T1 and T2 along the Y axis.

Further, in the example illustrated in FIGs. 5 to 8, a pattern forming the primary windings 12A and 12B may be formed on the other surface of the transformer winding substrate 6. Further, the transformer winding substrate 6 may be formed of a multilayer substrate, and the pattern forming the primary windings 12A and 12B may be formed on the intermediate layer.

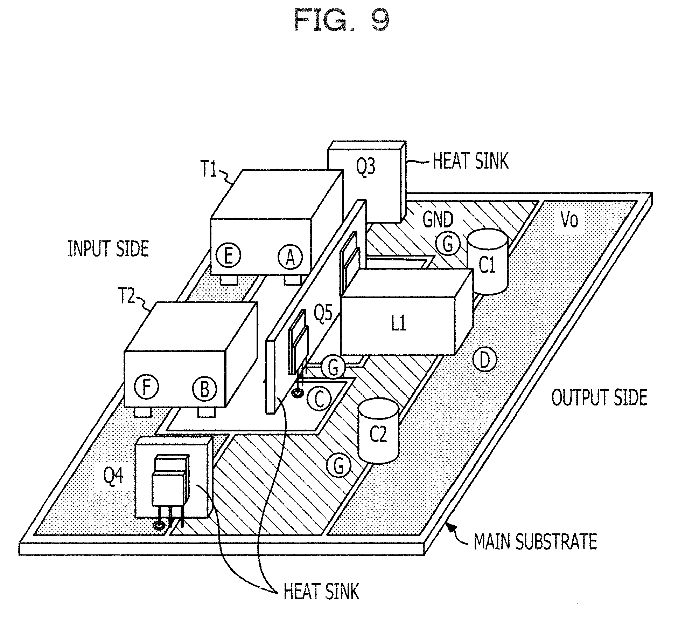

FIG. 9 is a perspective view illustrating a component arrangement and a wiring pattern of a secondary circuit according to a comparative example. In the comparative example, the secondary circuit is formed of only one substrate of a main substrate. Each of a first transformer T1 and a second transformer T2 are transformers configured by winding a conductive wire around an iron core, and synchronous rectifying transistors Q3, Q4, and Q5 are disposed away from the first transformer T1 and the second transformer T2.

In the comparative example, since the synchronous rectifying transistors Q3, Q4, and Q5 are disposed away from the first transformer T1 and the second transformer T2, it is difficult to achieve a small size, and the current route (that is, the loop distance) is increased. Further, since the connection between the first transformer T1 and the second transformer T2, and the synchronous rectifying transistors Q3, Q4, and Q5, and a choke coil L1 passes through the main substrate, there is a problem in that pattern resistance is increased, conductor loss is increased, and high efficiency is not achieved. Further, there is a problem in that parasitic inductance L is increased, so that a power noise is generated by a pulse current flowing through the parasitic inductance L, and thus it is difficult to achieve a high current. Further, there is a problem in that disposition of heat-generating components interferes with another cooling (for example, the first transformer T1 and the second transformer T2 interfere with a passage of cooling air to the synchronous rectifying transistor Q5), so that heat radiation properties are not good, and thus a heat sink becomes necessary.

In respect to the problems, according to the example illustrated in FIGs. 5 to 8, as described above, the aforementioned problems of the comparative example may be resolved at least partially to achieve small size, and decrease conductor loss and noise. As a result, the heat radiation property may be improved as well.

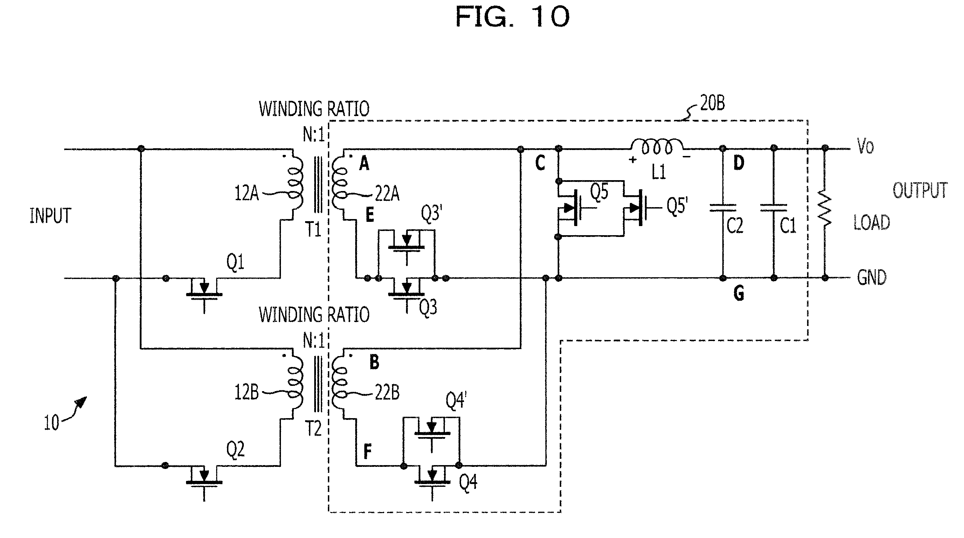

FIG. 10 is a diagram illustrating another example of a secondary circuit 20B together with an example of a part of the primary circuit 10.

The secondary circuit 20B illustrated in FIG. 10 is different from the secondary circuit 20 illustrated in FIG. 2 in that new synchronous rectifying transistors Q3', A4', and Q5' are separately connected to the synchronous rectifying transistors Q3, Q4, and Q5 in parallel, respectively. As described above, when the handled current is larger than the rated current of the synchronous rectifying transistors Q3, Q4, and Q5, the plurality of synchronous rectifying transistors may be connected in parallel for use.

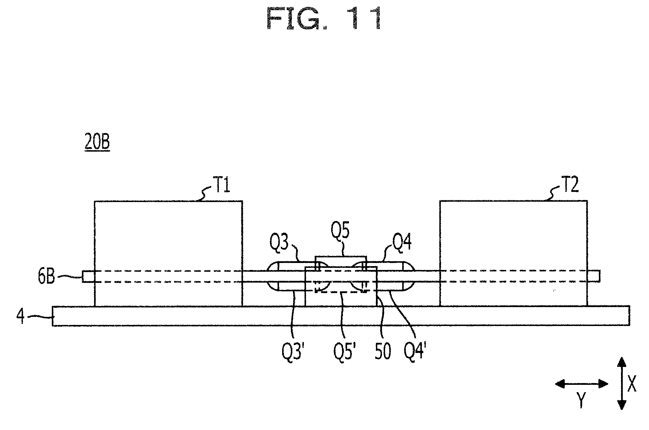

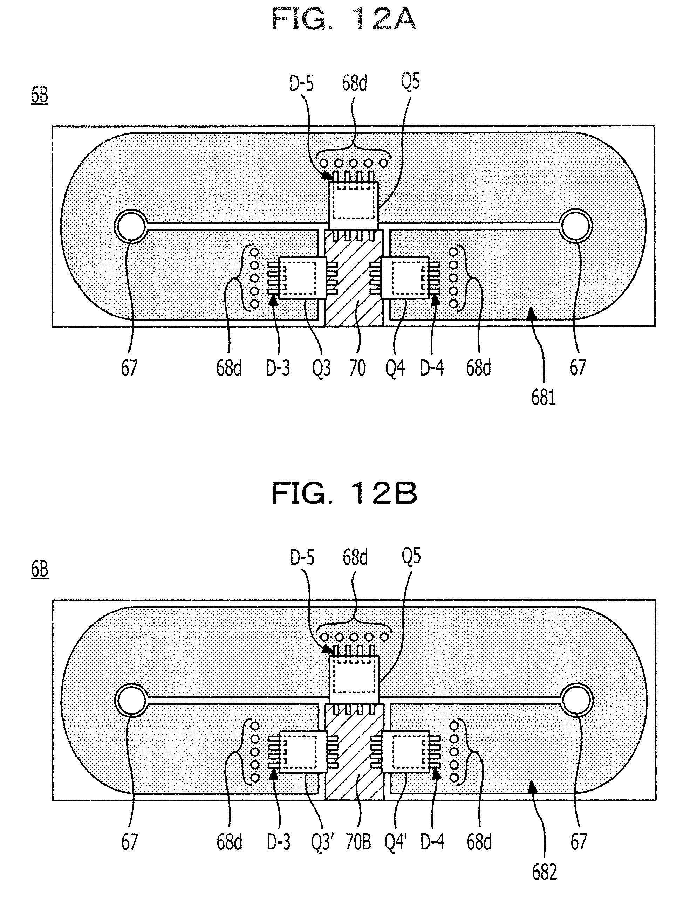

FIG. 11 is a side view schematically illustrating a component arrangement and a wiring pattern of the secondary circuit 20B illustrated in FIG. 10. FIG. 12A is a top plan view illustrating the front surface side of an example of a transformer winding substrate 6B in the secondary circuit 20B, and FIG. 12B is a top plan view illustrating the rear surface side of the example of a transformer winding substrate 6B in the secondary circuit 20B. Hereinafter, while a particular configuration of the secondary circuit 20B will be mainly described, the configuration may otherwise be the same as that of the secondary circuit 20 illustrated in FIG. 2.

As illustrated in FIG. 12A, the front surface of the transformer winding substrate 6B is similar to that of the transformer winding substrate 6 of the secondary circuit 20 illustrated in FIG. 2, but is different from that of the transformer winding substrate 6 of the secondary circuit 20 illustrated in FIG. 2 in that a winding pattern 681 has vias 68d.

As illustrated in FIG. 12B, a winding pattern 682 is formed on the rear surface of the transformer winding substrate 6B similar to the winding pattern 681 of the front surface side of the transformer winding substrate 6B. Further, similar to the ground side output unit 70 on the front surface side of the transformer winding substrate 6B, a ground output unit 70B is formed on the rear surface of the transformer winding substrate 6B. The ground output unit 70B may be connected to a solid pattern (for example, a ground layer) of a main substrate 4 through a copper plate 50 similar to the ground output unit 70. The winding pattern 682 is connected with the winding pattern 681 on the front surface side of the transformer winding substrate 6B through vias 68d.

The synchronous rectifying transformer Q3', Q4', and Q5' may be disposed on the rear surface side of the transformer winding substrate 6B as illustrated in FIG. 11. In this case, the synchronous rectifying transformer Q3', Q4', and Q5' may be disposed to face the synchronous rectifying transformer Q3, Q4, and Q5 with the transformer winding substrate 6B interposed therebetween in vertical direction (a direction vertical to the transformer winding substrate 6B) as illustrated in FIG. 1. A form of the connection of the synchronous rectifying transformers Q3', Q4', and Q5' to the wiring pattern 682 and the ground output unit 70B may be the same as the form of the connection of the synchronous rectifying transformers Q3, Q4, and Q5 to the wiring pattern 68 and the ground output unit 70 in the secondary circuit 20 illustrated in FIG. 2.

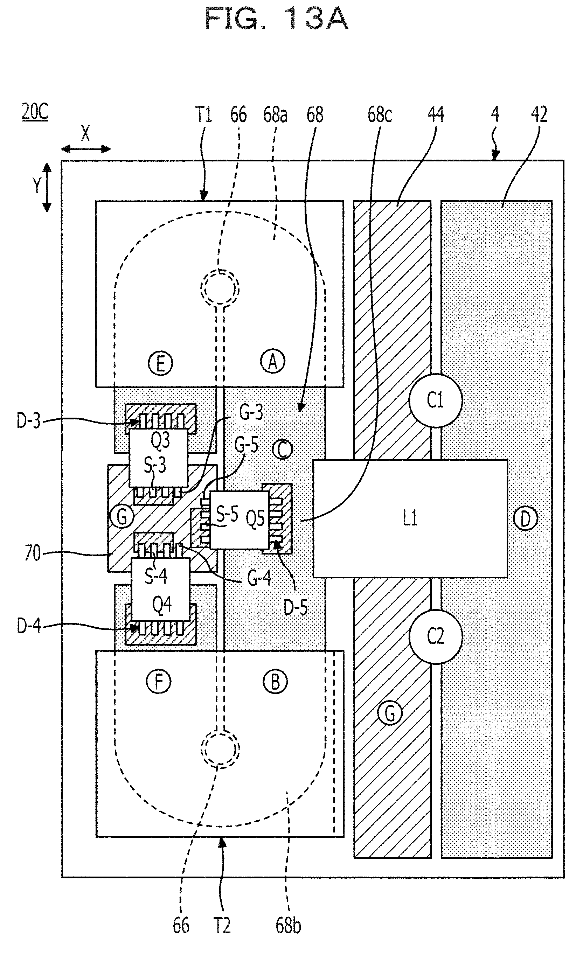

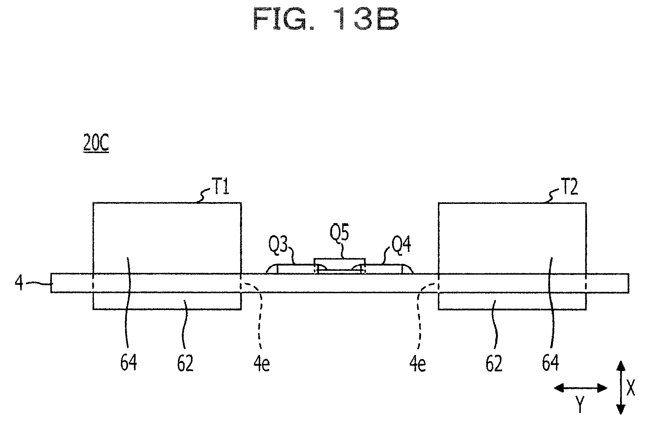

FIG. 13A is a top plan view schematically illustrating a component arrangement and a wiring pattern of a secondary circuit 20C according to another example. FIG. 13B is a side view of the secondary circuit 20C illustrated in FIG. 13A.

The example illustrated in FIGs. 13A and 13B is primarily different from the example illustrated in FIGs. 5 and 6 in that the transformer winding substrate 6 is not provided. That is, each pattern (for example, the winding pattern 68) or component (for example, the synchronous rectifying transistor Q3), which is formed or installed on the transformer winding substrate 6 in the example illustrated in FIGs. 5 and 6, is formed or installed on a main substrate 4 in the example illustrated in FIGs. 13A and 13B. In the example illustrated in FIGs. 13A and 13B, each pattern or component, which is formed or installed on the transformer winding substrate 6 in the example illustrated in FIGs. 5 and 6, may be formed or installed on the main substrate 4 with the same arrangement (for example, the pattern shape, a position relationship, and the like) as that of the example illustrated in FIGs. 5 and 6.

Specifically, in the example illustrated in FIGs. 13A and 13B, a winding pattern 68 is formed on the main substrate 4. Further, a ground output unit 70 is formed on the main substrate 4. Accordingly, the cooper plate 50, which is used in the example illustrated in FIGs. 5 and 6, is omitted. Synchronous rectifying transistors Q3, Q4, and Q5 are disposed on the main substrate 4. Further, the position relationship between the synchronous rectifying transistors Q3, Q4, and Q5, the winding pattern 68, and the ground output unit 70 are the same as the position relationship of the example illustrated in FIGs. 5 and 6. Further, an end of a choke coil L1 is connected to an output end (for example, circle A and circle B) of a high electric potential side in the winding pattern 68 on the main substrate 4. Particularly, similar to the example illustrated in FIGs. 5 and 6, the end (for example, circle C) of the choke coil L1 is connected to a connecting portion 68c of the winding pattern 68.

In the example illustrated in FIGs. 13A and 13B, the configuration of first and second transformers T1 and T2 are the same as in the example illustrated in FIGs. 5 and 6, but the disposition thereof is slightly different from the example illustrated in FIGs. 5 and 6. In particular for the first and second transformers T1 and T2, lower members 62 are attached to the rear surface of the main substrate 4 as illustrated in FIG. 13B. Further, the main substrate 4 is provided with through-holes 4e through which lower ends of side members 64 pass. The lower end of the side member 64 extends to the rear surface of the main substrate 4, passes through the through-hole 4e, and is coupled to the lower member 62. Further, similarly, an iron core 66 of each of the first and second transformers T1 and T2 may pass through a hole (not illustrated) to couple with the lower member 62 on the rear surface of the main substrate 4.

According to the example illustrated in FIGs. 13A and 13B, it is possible to obtain substantially the same effect as in the aforementioned example illustrated in FIGs. 5 and 6. However, according to the example illustrated in FIGs. 13A and 13B, the transformer winding substrate 6 or the copper plate 50 are omitted, so that it is possible to have fewer components than the aforementioned example illustrated in FIGs. 5 and 6. In the aforementioned example illustrated in FIGs. 5 and 6, the transformer winding substrate 6 may be cooled from the front and rear surfaces, so that cooling efficiency is good compared to the example illustrated in FIGs. 13A and 13B.

Even in the example illustrated in FIGs. 13A and 13B, new synchronous rectifying transformers Q3', Q4', and Q5' may be separately connected to the synchronous rectifying transistors Q3, Q4, and Q5 in parallel, respectively, similar to the secondary circuit 20B illustrated in FIG. 10.

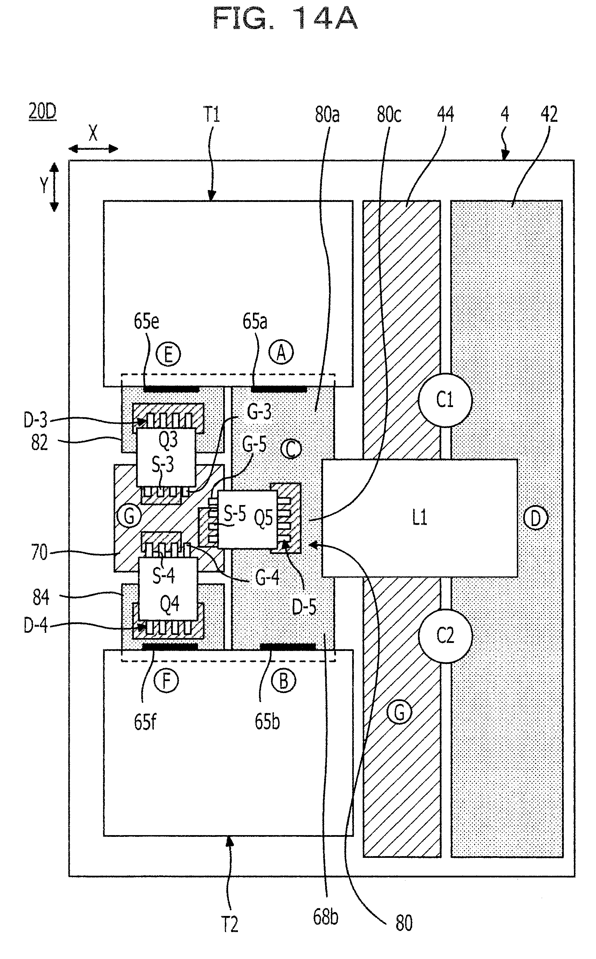

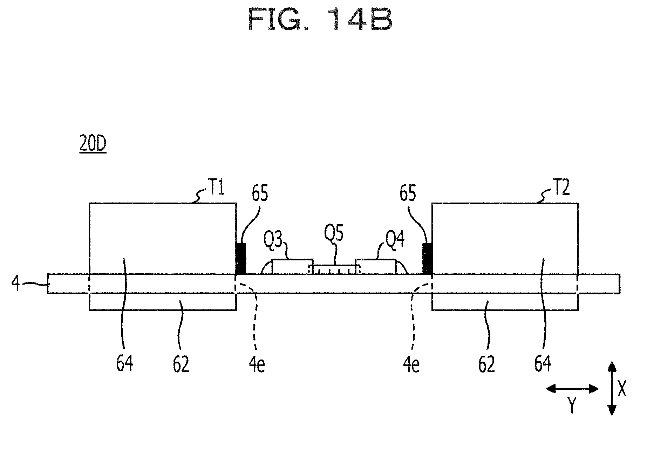

FIG. 14A is a top plan view schematically illustrating a component arrangement and a wiring pattern of a secondary circuit 20D according to another example. FIG. 14B is a side view of the secondary circuit 20D illustrated in FIG. 14A.

The example illustrated in FIGs. 14A and 14B is primarily different from the example illustrated in FIGs. 13A and 13B in that the winding pattern 68 of the first and second transformers T1 and T2 is not present.

In the example illustrated in FIGs. 14A and 14B, a first transformer T1 is configured by winding a conductive wire, which serves as a secondary winding 22A, around an iron core 66. The first transformer T1 has two terminals 65a and 65e corresponding to both output ends (for example, circle A and circle E) of the secondary winding 22A. The second transformer T2 is configured by winding a conductive wire, which serves as a secondary winding 22B, around the iron core 66. The second transformer T2 has two terminals 65b and 65f corresponding to both output ends (for example, circle B and circle F) of the secondary winding 22B. The terminals 65a and 65e face the terminals 65b and 65f, respectively, so that both the output ends (for example, circle A and circle E) of the secondary winding 22A face both output ends (for example, circle B and circle F) of the secondary winding 22B along the Y axis, as in the example illustrated in FIGs. 5 and 6.

Conductor patterns 80, 82, and 84 are formed on the main substrate 4, instead of the winding pattern 68 (for example, see FIG. 13A). The conductor pattern 80 includes a connecting portion 80c corresponding to the connecting portion 68c of the winding pattern 68, and terminal connection parts 80a and 80b at both sides of the connecting portion 80c along the Y axis. The terminal connection parts 80a and 80b, and the connecting portion 80c may be integrally formed with the same thickness as illustrated in FIG. 13A. Further, in the terminal connection parts 80a and 80b, as indicated by a dotted line in FIG. 13A, the ends thereof may extend to an area in which the first and second transformers T1 and T2 are installed. The terminal connection part 80a and the conductor pattern 82 may be a pattern corresponding to each end (for example, see FIG. 8) of the U-shaped portion 68a of the winding pattern 68 according to the example illustrated in FIGs. 5 and 6, and the terminal connection part 80b and the conductor pattern 84 may be a pattern corresponding to each end (for example, see FIG. 8) of the U-shaped portion 68b of the winding pattern 68 according to the example illustrated in FIGs. 5 and 6.

The terminals 65a and 65e are respectively connected to the terminal connection part 80a and the conductor pattern 82 by, for example, soldering. Further, the terminals 65b and 65f are respectively connected to the terminal connection part 80b and the conductor pattern 84 by, for example, soldering.

According to the example illustrated in FIGs. 14A and 14B, it is possible to obtain substantially the same effect as in the aforementioned example illustrated in FIGs. 5 and 6. However, according to the example illustrated in FIGs. 14A and 14B, since the wire is used without using the winding pattern 68, it is disadvantageous in that a resistance component and a parasitic inductance component are increased compared to an example of using the winding pattern 68 (for example, the example illustrated in FIGs. 13A and 13B).

In the example illustrated in FIGs. 14A and 14B, the orientation of the first and second transformers T1 and T2 is arbitrary as long as the terminals 65a and 65e and the terminals 65b and 65f face along the Y axis. For example, the first and second transformers T1 and T2 may be disposed in such a way that each iron core 66 extends in a direction vertical to the main substrate 4. The first and second transformers T1 and T2 may also be disposed in such a way that each iron core 66 extends in a direction parallel to the main substrate 4 (e.g,. along the Y axis).

Further, even in the example illustrated in FIGs. 14A and 14B, new synchronous rectifying transformers Q3', Q4', and Q5' may be separately connected to synchronous rectifying transistors Q3, Q4, and Q5 in parallel, respectively, similar to the secondary circuit 20B illustrated in FIG. 10.

Further, even in the example illustrated in FIGs. 14A and 14B, substantially similar to the aforementioned example illustrated in FIGs. 5 and 6, both output ends (for example, circle A and circle E) of the secondary winding 22A and both output ends (for example, circle B and circle F) of the secondary winding 22B may face each other along the Y axis with a slight deviation along the X axis. That is, the terminals 65a and 65e and the terminals 65b and 65f may face each other along the Y axis with a slight deviation along the X axis.

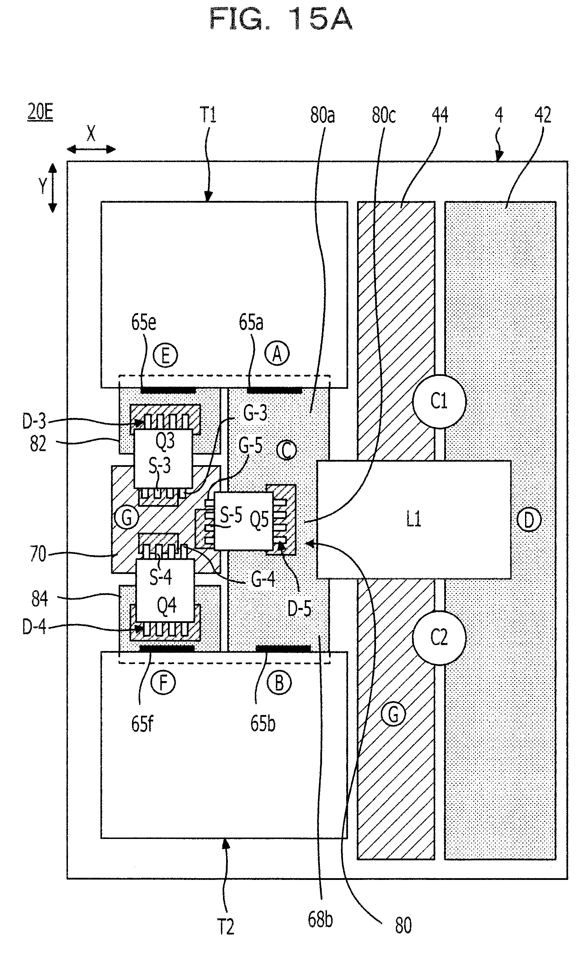

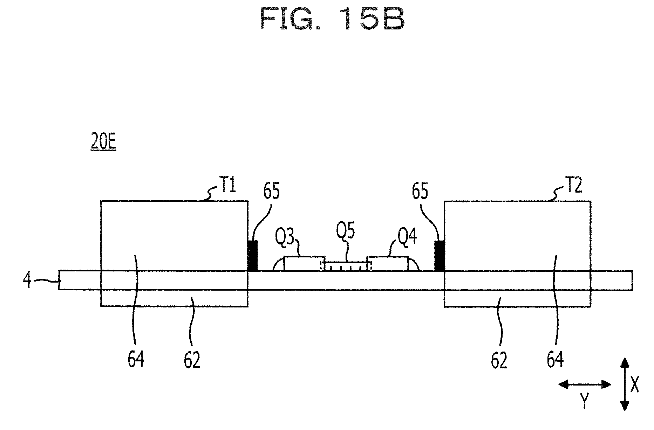

FIG. 15A is a top plan view schematically illustrating a component arrangement and a wiring pattern of a secondary circuit 20E according to another example. FIG. 15B is a side view of the secondary circuit 20E illustrated in FIG. 15A.

The example illustrated in FIGs. 15A and 15B is different from the example illustrated in FIGs. 14A and 14B in that the through-hole 4e is not formed in a main substrate 4. That is, in the example illustrated in FIGs. 15A and 15B, a hole related to the mounting of a first transformer T1 and a second transformer T2 is not formed on the main substrate 4. In the example illustrated in FIGs. 15A and 15B, the first transformer T1 is installed in an arrangement in which lower members 62 are loaded on the main substrate 4. Similarly, the second transformer T2 is installed in an arrangement in which the lower members 62 are loaded on the main substrate 4.

According to the example illustrated in FIGs. 15A and 15B, it is possible to obtain substantially the same effect as that of the aforementioned example illustrated in FIGs. 14A and 14B.

In the example illustrated in FIGs. 15A and 15B, any direction of the first and second transformers T1 and T2 is available as long as terminals 65a and 65e and terminals 65b and 65f face along the Y axis. For example, the first and second transformers T1 and T2 may be disposed in such a way that each iron core 66 extends in a direction vertical to the main substrate 4. The first and second transformers T1 and T2 may also be disposed in such a way that each iron core 66 extends in a direction parallel to the main substrate 4 (for example along the Y axis).

Further, even in the example illustrated in FIGs. 15A and 15B, new synchronous rectifying transformers Q3', Q4', and Q5' may be separately respectively connected to synchronous rectifying transistors Q3, Q4, and Q5 in parallel similar to the secondary circuit 20B illustrated in FIG. 10.

Further, even in the example illustrated in FIGs. 15A and 15B, substantially similar to the aforementioned example illustrated in FIGs. 5 and 6, both output ends (for example, circle A and circle E) of a secondary winding 22A and both output ends (for example, circle B and circle F) of a secondary winding 22B may face each other along the Y axis with a slight deviation along the X axis. That is, the terminals 65a and 65e and the terminals 65b and 65f may face each other along the Y axis with a slight deviation along the X axis.

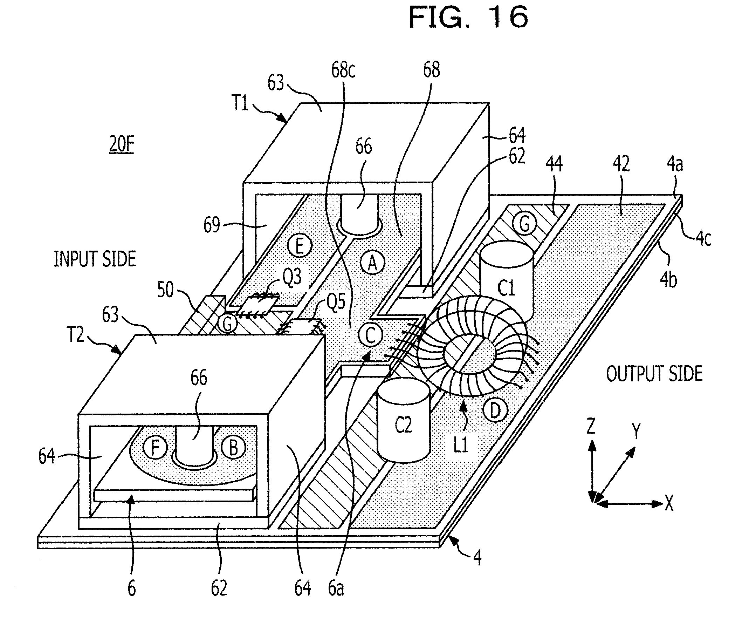

FIG. 16 is a perspective view schematically illustrating a component arrangement and a wiring pattern of a secondary circuit 20F according to another example.

The example illustrated in FIG. 16 is primarily different from the example illustrated in FIGs. 5 and 6 in that a connecting portion 68c of a transformer winding substrate 6 mainly protrudes toward the output side along the X axis. The aforementioned configuration is useful when a space for a connection with a choke coil L1 in the connecting portion 68c is necessary. The transformer winding substrate 6 need not essentially have a rectangular shape. In the example illustrated in FIG. 16, the example is disadvantaged in that the distance between a drain terminal D-5 of a synchronous rectifying transistor Q5 and an end (for example, circle C) of the choke coil L1 is longer than as in the example illustrated in FIGs. 5 and 6.

Although the respective embodiments are described above, the present disclosure is not limited to a specific embodiment, and various modifications and changes are available within the scope described in the claims. Further, all or a plurality of the constituent elements of the aforementioned embodiments may also be combined.

For example, in the aforementioned embodiment, the primary windings 12A and 12B of the primary circuit 10 and the secondary windings 22A and 22B of the secondary circuit 22 make two pairs, to be coupled through the first and second transformers T1 and T2. However, the disclosed technology may be applied even to a power supply device in which the primary windings and the secondary windings make three pairs or more, to be coupled through three or more transformers.

According to the present disclosure, it is possible to provide a power supply device capable of achieving a high current, while achieving small size and high efficiency, and decreasing power noise.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention has(have) been described in detail, it should be understood that the various changes, substitutions, and alterations could be made hereto without departing from the scope of the invention.

## Claims

1. A power supply device, in which two primary windings of a primary circuit and two secondary windings of a secondary circuit are coupled in parallel through first and second transformers,
wherein both output ends of the secondary winding of the first transformer and both output ends of the secondary winding of the second transformer are disposed on the same first substrate so as to face each other, and
a switching element for synchronous rectification is disposed in a region in the first substrate between the first transformer and the second transformer.

2. A power supply device comprising:
a primary circuit that includes two primary windings;
a secondary circuit that includes two secondary windings and a switching element for synchronous rectification;
a first transformer configured to couple one of the two primary windings with one of the two secondary windings;
a second transformer configured to couple the other one of the two primary windings with the other one of the two secondary windings; and
a first substrate on which both output ends of one of the two secondary windings and both output ends of the other one of the two secondary windings are disposed to face each other,
wherein the switching element for synchronous rectification is disposed in a region between the first transformer and the second transformer on the first substrate.

3. The power supply device according to any of the preceding claims, wherein output ends at high electric potential sides of the respective two secondary windings are connected with each other on the first substrate.

4. The power supply device according to any of the preceding claims, wherein each of the two secondary windings extend within a surface parallel to the first substrate.

5. The power supply device according to any of the preceding claims, wherein the first transformer and the second transformer are disposed in such a way that an iron core of the first transformer and an iron core of the second transformer face in a direction vertical to the first substrate.

6. The power supply device according to any of the preceding claims, wherein each of the two secondary windings includes a winding pattern formed on the first substrate.

7. The power supply device according to claim 6, wherein the winding pattern is formed in a U-shape, and
the winding pattern related to one of the two secondary windings, and the winding pattern related to the other side between the two secondary windings are formed in a direction in which U-shaped openings of the respective winding patterns face each other.

8. The power supply device according to any of the preceding claims, further comprising:
a second substrate separate from the first substrate, and disposed to be separated from the first substrate in a direction vertical to the first substrate,
wherein the secondary circuit includes capacitors,
the second substrate includes a positive electrode-side output unit to which one end of the capacitor of the secondary circuit is connected, and a ground output unit to which the other end of the capacitor is connected, on a surface thereof, and also includes a solid pattern, either on a rear surface thereof or in an intermediate layer thereof, connected to the ground output unit, and
the switching element for synchronous rectification on the first substrate is connected to the ground output unit through the solid pattern of the second substrate.

9. The power supply device according to any of the preceding claims, wherein the secondary circuit includes capacitors,
the first substrate includes on the top surface thereof a positive electrode-side output unit to which one end of the capacitor is connected, and a ground output unit, to which the other end of the capacitor is connected, and also includes on the rear surface thereof or in an intermediate layer thereof a solid pattern connected to the ground output unit, and
the switching element for synchronous rectification on the first substrate is connected to the ground output unit through the solid pattern.

10. The power supply device according to claims 8 or 9, wherein the secondary circuit includes a choke coil, and
the choke coil is connected between an output portion for high electric potential sides of the secondary windings of the first and second transformer on the first substrate, and the positive electrode-side output unit.

11. The power supply device according to any of the preceding claims, wherein the power supply device is formed of a double forward circuit.
